# EUROPEAN PATENT APPLICATION

(11) **EP 2 827 528 A1**
(43) Date of publication of application: **21.01.2015**
(21) Application number: 13760861.8
(22) Date of filing: 12.03.2013
(51) Int. Cl.: H04L 9/32

(54) **METHOD, DEVICE, AND SYSTEM FOR IDENTITY AUTHENTICATION**

(30) Priority: 12.03.2012 CN 201210063632
(71) Applicant: China Iwncomm Co., Ltd., Xi'an, Shaanxi 710075 (CN)
(72) Inventor: DU, Zhiqiang, Xi'an Shaanxi 710075 (CN); CAO, Jun, Xi'an Shaanxi 710075 (CN); TIE, Manxia, Xi'an Shaanxi 710075 (CN); LI, Yi, Xi'an Shaanxi 710075 (CN)
(74) Representative: Maiwald Patentanwalts GmbH
(86) International application number: PCT/CN2013/072494
(87) International publication number: WO 2013/135170

(57) **Abstract**

The present invention is related to the field of identity authentication. Provided are a method, device, and system thereof for identity authentication, solving the problem that existing identity authentication technologies are incapable of protecting personal privacy, and that authentication technologies comprising personal privacy must provide a traceability feature. The method for identity authentication comprises: 1) a first authenticator transmitting to a second authenticator a first identity authentication message; 2) the second authenticator transmitting to the first authenticator a second identity authentication message; 3) the first authenticator transmitting to an authentication server a third identity authentication message; 4) the authentication server verifying the validity of a secure domain for the second authenticator on the basis of the third identity authentication message; 5) the authentication server transmitting to the first authenticator a fourth identity authentication message; and, 6) the first authenticator authenticating when the fourth identity authentication message is received. The identity authentication system mainly comprises: the first authenticator, the second authenticator, the secure domain for the second authenticator, and the authentication server.

## Description

The present application claims the priority Chinese Patent Application No. 201210063632.3, entitled "METHOD, DEVICE, AND SYSTEM FOR IDENTITY AUTHENTICATION", filed on March 12, 2012 with the State Intellectual Property Office of People's Republic of China, which is incorporated herein by reference in its entirety.

### FIELD OF TECHNOLOGY

The disclosure relates to the field of identity authentication, and in particular to a method, device and system for identity authentication.

### BACKGROUND

Nowadays, people pay more and more attention on protection of privacy. On many occasions needing verifying a resident identity, it is undesirable for people to reveal identity information to a verifier while legality of their identities is verified, so as to fully protect their privacy. For example, when voting for some sensitive events, a voter hopes to vote with a legal identity but not to expose himself; on some consumption occasions, when making a payment, a customer dose not want a merchant to know personal information of himself; after logging on a network with a manageable identity, most of time a network user dose not want to expose identity information of himself to public. Presently, this kind of need for privacy protection is increasingly evident.

There are kinds of technologies for providing a service of identity authentication, and generally an identity authentication based on public key cryptographic techniques is used, in which verification for identity legality of an authenticatee is achieved through digital signature and at the same time identity information of the authenticatee is revealed to an authenticator. Obviously, this kind of authentication has significant limitations in providing authentication service for above application occasions due to poor protection for user privacy. On the other hand, it is desirable for identity authentication technologies providing privacy protection to provide a traceable feature, so as to facilitate control of an administrator when necessary.

### SUMMARY

In the disclosure, in view of the problem that the conventional identity authentication technologies are incapable of protecting personal privacy and the desirability for authentication technologies having personal privacy to provide a traceable feature, as described above, a method, device and system for identity authentication are provided.

A method for identity authentication is provided according to an embodiment of the disclosure, including:
1) transmitting, by a first authenticator, a first identity authentication message to a second authenticator, to launch the authentication;
2) transmitting, by the second authenticator, a second identity authentication message to the first authenticator, where the second identity authentication message includes an identification of a secure domain where the second authenticator resides and identity authentication information of the second authenticator;
3) transmitting, by the first authenticator, a third identity authentication message to an authentication server, where the third identity authentication message includes the identification of the secure domain where the second authenticator resides;
4) after the authentication server receives the third identity authentication message, verifying, by the authentication server, according to the third identity authentication message, legality of the secure domain where the second authenticator resides;
5) transmitting, by the authentication server, a fourth identity authentication message to the first authenticator, where the fourth identity authentication message includes a result for verifying the secure domain where the second authenticator resides by the authentication server and identity authentication information of the authentication server with respect to information including the result for verifying the secure domain where the second authenticator resides;
6) after the first authenticator receives the fourth identity authentication message, verifying identity legality of the second authenticator.

A first authentication device is provided according to an embodiment of the disclosure, including:
a transmitting unit, a receiving unit and a verifying unit, where:
the transmitting unit is configured to transmit a first identity authentication message to a second authentication device, to launch the authentication;
the receiving unit is configured to receive a second identity authentication message transmitted by the second authentication device, where the second identity authentication message includes an identification of a secure domain where the second authentication device resides and identity authentication information of the second authentication device;
the transmitting unit is further configured to transmit a third identity authentication message to an authentication server, where the third identity authentication message includes the identification of the secure domain where the second authentication device resides;
the receiving unit is further configured to receive a fourth identity authentication message transmitted by the authentication server, where the fourth identity authentication message includes a result for verifying the secure domain where the second authentication device resides by the authentication server and identity authentication information of the authentication server with respect to information including the result for verifying the secure domain where the second authentication device resides;
the verifying unit is configured to verify identity legality of the second authentication device.

A second authentication device is also provided according to an embodiment of the disclosure, including:
a receiving unit and a transmitting unit; where:
the receiving unit is configured to receive a first identity authentication message transmitted by a first authentication device;
the transmitting unit is configured to transmit a second identity authentication message to the first authentication device, where the second identity authentication message includes an identification of a secure domain where the second authentication device resides and identity authentication information of the second authentication device.

An authentication server is also provided according to an embodiment of the disclosure, including:
a receiving unit, a verifying unit and a transmitting unit; where:
the receiving unit is configured to receive a third identity authentication message transmitted by a first authentication device, the third identity authentication message includes an identification of a secure domain where the second authentication device resides;
the verifying unit is configured to verify, according to the third identity authentication message, legality of the secure domain where the second authentication device resides;
the transmitting unit is configured to transmit a fourth identity authentication message to the first authentication device, the fourth identity authentication message includes a result for verifying the secure domain where the second authentication device resides by the authentication server and identity authentication information of the authentication server with respect to information including the result for verifying the secure domain where the second authentication device resides.

An identity authentication system, configured to execute the method for identity authentication, is also provided according to an embodiment of the disclosure. The system includes a first authentication device, a second authentication device, a secure domain where the second authentication device resides, and an authentication server; during a process of identity authentication between the first authentication device and the second authentication device, the second authentication device only interacts with the first authentication device, and the authentication server only interacts with the first authentication device; where

interaction performed between the first authentication device and the second authentication device includes: transmitting, by the first authentication device, a first identity authentication message to the second authentication device; transmitting, by the second authentication device, a second identity authentication message, which includes an identification of the secure domain where the second authentication device resides and identity authentication information of the second authentication device, to the first authentication device; and

interaction performed between the authentication server and the first authentication device includes: transmitting, by the first authentication device, a third identity authentication message to an authentication server, where the third identity authentication message includes the identification of the secure domain where the second authentication device resides; transmitting, by the authentication server, a fourth identity authentication message to the first authentication device, where the fourth identity authentication message includes a result for verifying the secure domain where the second authentication device resides by the authentication server and identity authentication information of the authentication server with respect to information including the result for verifying the secure domain where the second authentication device resides;

According to the embodiment of the disclosure, during an authentication process, a second authenticator completes authentication anonymously, therefore the privacy of the second authenticator is protected while the second authenticator is verified..

### BRIEF DESCRIPTION OF THE DRAWINGS

The appended drawings described here are to facilitate further understanding of the disclosure, which forms a part of the disclosure but not limits the disclosure. In the drawings:
Fig. 1 is a schematic flow chart of a method for identity authentication according to an embodiment of the disclosure.
Fig. 2 is a schematic structural diagram of a first authentication device according to an embodiment of the disclosure.
Fig. 3 is a schematic structural diagram of a second authentication device according to an embodiment of the disclosure.
Fig. 4 is a schematic structural diagram of an authentication server according to an embodiment of the disclosure.

### DETAILED DESCRIPTION OF THE EMBODIMENTS

To make the purpose, solution and merits of the disclosure clearer, the embodiments of the disclosure are further described in detail in the following in conjunction with appended drawings. In the disclosure, schematic embodiments and description thereof are intended to explain the disclosure, but not to limit the disclosure.

In the disclosure, a system includes a first authentication device, a second authentication device, a secure domain where the second authentication device resides and an authentication server. The first authentication device and the second authentication device may mutually be an authenticator and a device to be authenticated; the first authentication device has public authentication information and private authentication information of itself. The private authentication information is utilized in generating identity authentication information to be used by other authentication devices for authenticating the first authentication device, and the public authentication information reveals to public the identity authentication information which is to be used by other authentication devices to verify the first authentication device. The first authentication device is provided with an identification, which may be an identifier of the first authentication device or identity proof information of the first authentication device. The secure domain is a logic division with boundary property, and entities within the boundary share certain public authentication information. Each entity in the secure domain has his own private authentication information which is utilized in generating identity authentication information used by other authentication devices for authenticating the entity. The public authentication information of the secure domain reveals the identity authentication information for facilitating other authentication devices to verify the entity. The secure domain is provided with an identification which may be an identifier of the secure domain or identity proof information of the secure domain. The authentication server functions as a trusted third party to provide authentication service for the authentication device and help the authentication device to achieve identity authentication of the device to be authenticated. The authentication server has private authentication information and corresponding public authentication information, the public authentication information is revealed to other entities and is used in verifying identity authentication information generated through using the private authentication information by the authentication server. For the system of the disclosure, in the implementation of the identity authentication between the first authentication device and the second authentication device, the second authentication device only interacts with the first authentication device (referring to the method for identity authentication provided in the disclosure for the specific content of the interaction), the authentication server only interacts with the first authentication device (referring to the method for identity authentication provided in the disclosure for the specific content of the interaction).

The method for identity authentication provided in the disclosure includes:
Step 1: transmitting, by a first authenticator, a first identity authentication message to a second authenticator, to launch the authentication;
Step 2: transmitting, by a second authenticator, a second identity authentication message to the first authenticator, where the second identity authentication message includes an identification of a secure domain where the second authenticator resides and identity authentication information of the second authenticator;
Step 3: transmitting, by the first authenticator, a third identity authentication message to an authentication server, where the third identity authentication message includes the identification of the secure domain where the second authenticator resides;
Step 4: after the authentication server receives the third identity authentication message, verifying, by the authentication server, legality of the secure domain where the second authenticator resides, according to the third identity authentication message.
Step 5: returning, by the authentication server, a fourth identity authentication message to the first authenticator, where the fourth identity authentication message includes a result for verifying the secure domain where the second authenticator resides and identity authentication information of the authentication server with respect to information including the result for verifying.
Step 6: after the first authenticator receives the fourth identity authentication message, verifying, by the first authenticator, identity legality of the second authenticator.

In other embodiments, the first identity authentication message may further includes a first time-varying parameter (the time-varying parameter may be a time stamping, a serial number or a random number), which is generated by the first authenticator; the identity authentication information of the second authenticator included in the second identity authentication message may further includes the first time-varying parameter and an identifier of the first authenticator; the identity authentication information of the authentication server included in the fourth identity authentication message may further includes a third time-varying parameter.

Specifically, in the step 6, after the first authenticator receives the fourth identity authentication message, a specific implementation of verifying identity legality for the second authenticator may include following steps:
1) verifying, by the first authenticator, whether the identity authentication information of the authentication server included in the fourth identity authentication message is valid, verifying whether the third time-varying parameter which is generated by the first authenticator and is included in the third identity authentication message confirms to the third time-varying parameter included in the identity authentication information of the authentication server in a case that the identity authentication information of the authentication server includes the third time-varying parameter, executing step 2) if the identity authentication information of the authentication server included in the fourth identity authentication message is valid and the third time-varying parameter included in the third identity authentication message confirms to the third time-varying parameter included in the identity authentication information of the authentication server, otherwise, completing the identity authentication for the second authenticator by the first authenticator;
2) executing step 3) if the first authenticator determines, according to the result for verifying the secure domain where the second authenticator resides by the authentication server, that the secure domain where the second authenticator resides is legal and valid, or else determining that the second authenticator is illegal and completing the identity authentication for the second authenticator by the first authenticator;
3) acquiring, by the first authenticator, public authentication information of the secure domain where the second authenticator resides from the fourth identity authentication message, verifying, according to the public authentication information, whether the identity authentication information of the second authenticator is valid, checking whether the first time-varying parameter which is generated by the first authenticator and is included in the first identity authentication message is consistent with the first time-varying parameter included in the identity authentication information of the second authenticator in a case that the identity authentication information of the second authenticator includes the first time-varying parameter, determining that the second authenticator is legal if the identity authentication information of the second authenticator is valid and the first time-varying parameter included in the first identity authentication message is consistent with the first time-varying parameter included in the identity authentication information of the second authenticator, or else, determining that the second authenticator is illegal.

In other embodiments, the first identity authentication message in step 1 further includes an identification of the first authenticator; the third identity authentication message in step 3 further includes the identification of the first authenticator; the authentication server in step 4 further verifies the legality of the secure domain where the second authenticator resides according to the third identity authentication message; the fourth identity authentication message is modified by: adding a result for verifying the first authenticator by the authentication server and identity authentication information of the authentication server with respect to information including the result for verifying the first authenticator into the fourth identity authentication message, or, adding the result for verifying the first authenticator by the authentication server into the fourth identity authentication message, and further including the result for verifying the first authenticator by the authentication server in the identity authentication information of the authentication server included in the fourth identity authentication message, where the identity authentication information of the authentication server with respect to information including the result for verifying the first authenticator is identity authentication information newly added in the fourth identity authentication message, and the process of further including the result for verifying the first authenticator by the authentication server in the identity authentication information of the authentication server included in the fourth identity authentication message includes adding the result for verifying the first authenticator into the original identity authentication information of the authentication server.

Furthermore, in step 2, the second identity authentication message may further include a second time-varying parameter generated by the second authenticator, the identity authentication information of the second authenticator included in the second identity authentication message further includes the second time-varying parameter; in step 3, the third identity authentication message may further include the second time-varying parameter.

In this case, after the first authenticator determines that the identity of the second authenticator is legal in step 6, step 7 may be added, in which the first authenticator may transmit a fifth identity authentication message including the identity authentication information of the first authenticator; and step 8 may be added, in which after receiving the fifth identity authentication message, the second authenticator verifies the fifth identity authentication message and determines identity legality of the first authenticator according to the verification result.

The process of verifying the fifth identity authentication message by the second authenticator and determining by the second authenticator identity legality of the first authenticator according to the verification result includes following steps:
1) In a case that the identity authentication information of the authentication server with respect to information including the result for verifying the first authenticator is verified to be valid by the second authenticator, and the identity authentication information of the authentication server with respect to information including the result for verifying the first authenticator includes the second time-varying parameter, checking whether the second time-varying parameter which is generated by the second authenticator and is included in the second identity authentication message confirms to the second time-varying parameter included in the identity authentication information of the authentication server with respect to information including the result for verifying the first authenticator, executing 2) if the second time-varying parameter included in the second identity authentication message confirms to the second time-varying parameter included in the identity authentication information of the authentication server with respect to information including the result for verifying the first authenticator, or else determining that the first authenticator is illegal.
2) If the second authenticator determines that the first authenticator is legal and valid according to the result for verifying the first authenticator by the authentication server, executing 3), or else, determining that the first authenticator is illegal;
3) acquiring, by the second authenticator, the public authentication information of the first authenticator; verifying, according to the public authentication information, whether the first authenticator is valid, checking whether the identifier of the secure domain where the second authenticator resides is consistent with the identifier of the secure domain where the second authenticator resides included in the identity authentication information of the first authenticator, and checking whether the second time-varying parameter which is generated by the second authenticator and is included in the second identity authentication message is consistent with the second time-varying parameter included in the identity authentication information of the second authenticator in a case that the identity authentication information of the second authenticator includes the second time-varying parameter, determining that the first authenticator is legal if the identifier of the secure domain where the second authenticator resides is consistent with the identifier of the secure domain where the second authenticator resides and the second time-varying parameter which is generated by the second authenticator and is included in the second identity authentication message is consistent with the second time-varying parameter included in the identity authentication information of the second authenticator, or else, determining that the first authenticator is illegal.

In step 4, the authentication server verifies, according to the third identity authentication message, the identification of the secure domain where the second authenticator resides and checks legality of the secure domain where the second authenticator resides, in two ways.

In the first way, if the identification of the secure domain where the second authenticator resides included in the third identity authentication message is an identifier of the secure domain where the second authenticator resides, the authentication server searches the public authentication information of the secure domain where the second authenticator resides; if the public authentication information of the secure domain where the second authenticator resides is found, it may be determined that the secure domain where the second authenticator resides is legal, otherwise it may be determined that the secure domain where the second authenticator resides is illegal.

In the second way, if the identification of the secure domain where the second authenticator resides included in the third identity authentication message is the identity proof information of the secure domain where the second authenticator resides, the authentication server checks validity of the identity proof information of the secure domain where the second authenticator resides; if the identity proof information of the secure domain where the second authenticator resides is valid, it may be determined that the secure domain where the second authenticator resides is valid, or else it may be determined that the secure domain where the second authenticator resides is illegal.

In step 4, the authentication server may further verify, according to the third identity authentication message, legality of the first authenticator, in two ways.

In the first way, if the identification of the first authenticator included in the third identity authentication message is the identifier of the first authenticator, the authentication server searches the public authentication information of the first authenticator; if the public authentication information of the first authenticator is found, it may be determined that the first authenticator is legal, or else it may be determined that the first authenticator is illegal.

In the second way, if the identification of the first authenticator included in the third identity authentication message is the identity proof information of the first authenticator, the authentication server checks validity of the identity proof information for the first authenticator; if the identity proof information of the first authenticator is valid, it may be determined that the first authenticator is legal, or else it may be determined that the first authenticator is illegal.

In the disclosure, the first identity authentication message, the second identity authentication message and the third identity authentication message may further include optional fields respectively.

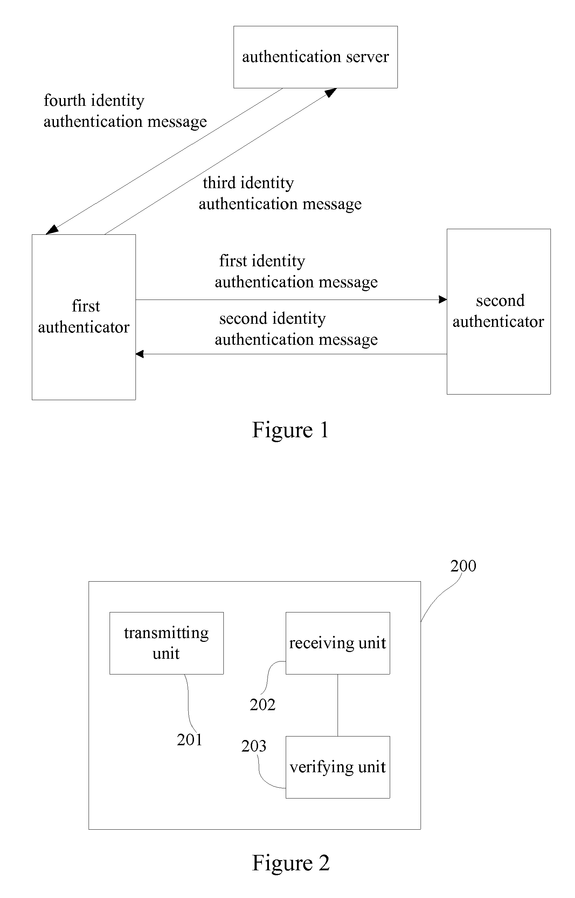

Fig.2 is a schematic structural diagram of a first authentication device according to the embodiments of the disclosure.

The first authentication device 200 includes a transmitting unit 201, a receiving unit 202 and a verifying unit 203.

The transmitting unit 201 transmits a first identity authentication message to a second authentication device, to launch the authentication.

The receiving unit 202 receives a second identity authentication message transmitted by the second authentication device, where the second identity authentication message includes an identification of a secure domain where the second authentication device resides and identity authentication information of the second authentication device.

The transmitting unit 201 transmits a third identity authentication message to the authentication server, where the third identity authentication message includes the identification of the secure domain where the second authentication device resides.

The receiving unit 202 receives a fourth identity authentication message transmitted by the authentication server, where the fourth identity authentication message includes a result for verifying the secure domain where the second authentication device resides by the authentication server and identity authentication information of the authentication server with respect to information including the result for verifying the secure domain where the second authentication device resides.

The verifying unit 203 is connected to the receiving unit 202 to verify identity legality of the second authentication device.

The transmitting unit 201 is further configured to transmit a fifth identity authentication message to the second authentication device, where the fifth identity authentication message includes identity authentication information of the first authentication device.

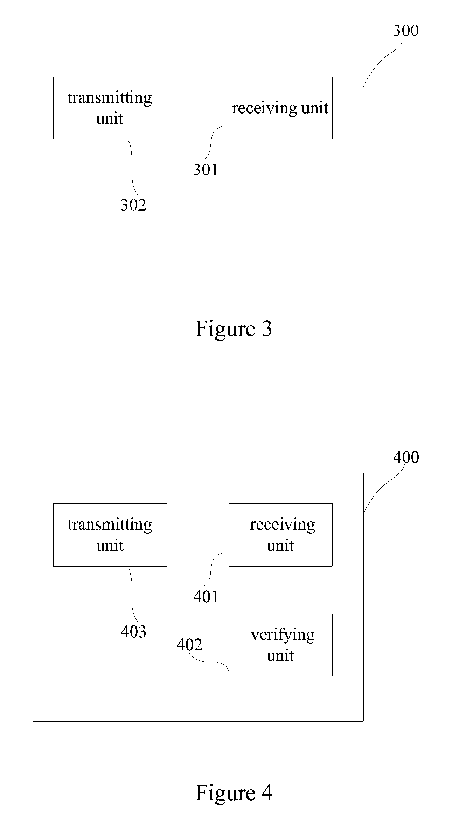

Fig.3 is a schematic structural diagram of a second authentication device according to the embodiment of the disclosure.

The second authentication device 300 includes a receiving unit 301 and a transmitting unit 302.

The receiving unit 301 is configured to receive a first identity authentication message transmitted by a first authentication device.

The transmitting unit 302 is configured to transmit a second identity authentication message to the first authentication device, where the second identity authentication message includes an identification of a secure domain where the second authentication device resides and identity authentication information of the second authentication device.

The receiving unit 301 is configured to receive a fifth identity authentication message transmitted by the first authentication device.

The second authentication device 300 further includes a verifying unit, which is configured to verify according to the fifth identity authentication message received by the receiving unit and to determine identity legality of the first authentication device according to a verification result.

Fig.4 is a schematic structural diagram of an authentication server according to the embodiments of the disclosure.

The authentication server 400 includes a receiving unit 401, a verifying unit 402 and a transmitting unit 403.

The receiving unit 401 is configured to receive a third identity authentication message transmitted by a first authentication device, and the third identity authentication message includes an identification of a secure domain where the second authentication device resides.

The verifying unit 402 is connected to the receiving unit 401 and configured to verify, according to the third identity authentication message, legality of the secure domain where the second authentication device resides.

The transmitting unit 403 is configured to transmit a fourth identity authentication message to the first authentication device, where the fourth identity authentication message includes a result for verifying the secure domain where the second authentication device resides by the authentication server and identity authentication information of the authentication server with respect to information including the result for verifying the secure domain where the second authentication device resides.

To facilitate understanding the method for identity authentication in the disclosure, two preferred embodiments are provided as follows.

### First preferred embodiment

The first preferred embodiment is a preferred embodiment illustrating a process for a first authenticator to authenticate an identity of a second authenticator, including following steps.

Step1: transmitting, by the first authenticator, a first identity authentication message to the second authenticator, where the first identity authentication message includes a first time-varying parameter generated by the first authenticator and a first optional field.

Step 2: transmitting, by the second authenticator, a second identity authentication message to the first authenticator, where the second identity authentication message includes an identification of a secure domain where the second authenticator resides, a second optional field, and identity authentication information of the second authenticator, where the identity authentication information of the second authenticator is with respect to information including an identifier of the first authenticator, the first time-varying parameter and a third optional field.

Step 3: transmitting, by the first authenticator, a third identity authentication message to the authentication server, where the third identity authentication message includes the identification of the secure domain where the second authenticator resides, a third time-varying parameter generated by the first authenticator and a fourth optional field.

Step4: after the authentication server receives the third identity authentication message, verifying, by the authentication server according to the identification of the secure domain where the second authenticator resides, legality of the secure domain where the second authenticator resides;

the process of verifying, by the authentication server, legality of the secure domain where the second authenticator resides may include:

in a case that the identification of the secure domain where the second authenticator resides included in the third identity authentication message is an identifier of the secure domain where the second authenticator resides, searching, by the authentication server, valid public authentication information of the secure domain where the second authenticator resides; in a case that the identification of the secure domain where the second authenticator resides is identity proof information of the secure domain where the second authenticator resides, checking, by the authentication server, validity of the identity proof information of the secure domain where the second authenticator resides.

Step 5: after the authentication server checks legality of the secure domain where the second authenticator resides, returning, by the authentication server, a fourth identity authentication information to the first authenticator, where the fourth identity authentication information includes a result for verifying the secure domain where the second authenticator resides by the authentication server, identity authentication information of the authentication server, where the identity authentication information of the authentication server is with respect to information including the result for verifying the secure domain where the second authenticator resides, the third time-varying parameter and a fifth optional field.

Step 6: after the first authenticator receives the fourth identity authentication information, verifying identity legality of the second authenticator, including:

6.1) verifying, by the first authenticator, whether identity authentication information of the authentication server with respect to information including the result for verifying the secure domain where the second authenticator resides, the third time-varying parameter and the fifth optional field is valid according to public authentication information of the authentication server, and checking, by the first authenticator, whether the third time-varying parameter which is generated by the first authenticator and is included in the third identity authentication message confirms to the third time-varying parameter included in the identity authentication information of the authentication server with respect to information including the result for verifying the secure domain where the second authenticator resides by the authentication server, the third time-varying parameter and the fifth optional field; if the identity authentication information of the authentication server with respect to information including the result for verifying the secure domain where the second authenticator resides, the third time-varying parameter and the fifth optional field is valid and the third time-varying parameter which is generated by the first authenticator and is included in the third identity authentication message confirms to the third time-varying parameter included in the identity authentication information of the authentication server with respect to information including the result for verifying the secure domain where the second authenticator resides by the authentication server, the third time-varying parameter and the fifth optional field, executing 6.2); or else, determining that the second authenticator is illegal;

6.2) acquiring, by the first authenticator, the result for verifying the secure domain where the second authenticator resides by the authentication server, executing 6.3) if the secure domain where the second authenticator resides is determined to be valid according to the verification result; otherwise, determining that the second authenticator is illegal;

6.3) acquiring, by the first authenticator, the public authentication information of the secure domain where the second authenticator resides, verifying, according to the public authentication information, whether the identity authentication information of the second authenticator with respect to information including the identifier of the secure domain where the second authenticator resides, the first time-varying parameter, and the third optional field is valid, checking whether the identifier of the secure domain where the second authenticator resides is consistent with the identifier of the secure domain where the second authenticator resides included in the identity authentication information of the second authenticator with respect to information including the identifier of the secure domain where the second authenticator resides, the first time-varying parameter and the third optional field in a case that the identity authentication information of the second authenticator includes the first time-varying parameter" verifying whether the first time-varying parameter which is generated by the first authenticator and is included in the first identity authentication message is consistent with the first time-varying parameter included in the identity authentication information of the second authenticator with respect to information including the identifier of the secure domain where the second authenticator resides, the first time-varying parameter and the third optional field; if the identity authentication information of the second authenticator with respect to information including the identifier of the secure domain where the second authenticator resides, the first time-varying parameter, and the third optional field is valid, the identifier of the secure domain where the second authenticator resides is consistent with the identifier of the secure domain where the second authenticator resides included in the identity authentication information of the second authenticator with respect to information including the identifier of the secure domain where the second authenticator resides, the first time-varying parameter and the third optional field, and the first time-varying parameter generated by the first authenticator included in the first identity authentication message is consistent with the first time-varying parameter included in the identity authentication information of the second authenticator with respect to information including the identifier of the secure domain where the second authenticator resides, the first time-varying parameter and the third optional field, determining that the second authenticator is legal; or else, determining that the second authenticator is illegal. The first authenticator completes authentication of the second authenticator

Through above process of authenticating the identity of the second authenticator by the first authenticator, the first authenticator may authenticate identity legality of the second authenticator, and identity information of the second authenticator is protected from being exposed.

### Second preferred embodiment

The second preferred embodiment is a preferred embodiment illustrating mutual authentication between the first authenticator and the second authenticator, including following steps.

Step1: transmitting, by the first authenticator, a first identity authentication message to the second authenticator, where the first identity authentication message includes a first time-varying parameter generated by the first authenticator, an identification of the first authenticator and a first optional field.

Step2: transmitting, by the second authenticator, a second identity authentication message to the first authenticator, where the second identity authentication message includes an identification of the secure domain where the second authenticator resides, the first time-varying parameter, a second time-varying parameter generated by the second authenticator, a second optional field and identity authentication information of the second authenticator, where identity authentication information of the second authenticator is with respect to information including the identifier of the secure domain where the second authenticator resides, the first time-varying parameter, the second time-varying parameter generated by the second authenticator, the identifier of the first authenticator and a third optional field;

Step 3: transmitting, by the first authenticator, a third identity authentication message to an authentication server, where the third identity authentication message includes the identification of the secure domain where the second authenticator resides, the second time-varying parameter, a third time-varying parameter generated by the first authenticator, the identification of the first authenticator and a fourth optional field;

Step 4: after the authentication server receives the third identity authentication message, checking, by the authentication server, legality of the secure domain where the second authenticator resides and legality of the first authenticator, in the following way:

in the third identity authentication message, if the identification of the secure domain where the second authenticator resides is an identifier of the secure domain where the second authenticator resides, the authentication server searches valid public authentication information of the secure domain where the second authenticator resides; if the identification of the secure domain where the second authenticator resides is identity proof information of the secure domain where the second authenticator resides, the authentication server checks validity of the identity proof information of the secure domain where the second authenticator resides; if the identification of the first authenticator is an identifier of the first authenticator, the authentication server searches valid public authentication information of the first authenticator; if the identification of the first authenticator is identity proof information of the first authenticator, the authentication server checks validity of the identity proof information of the first authenticator.

Step 5: after the authentication server checks the legality of the first authenticator and the legality of the secure domain where the second authenticator resides, returning a fourth identity authentication information to the first authenticator,

where the fourth identity authentication information may be a message, which includes a result for verifying the secure domain where the second authenticator resides by the authentication server, includes the result for verifying the first authenticator by the authentication server, includes identity authentication information of the authentication server with respect to information including the result for verifying the secure domain where the second authenticator resides together with the third time-varying parameter and further together with a fifth optional field, and includes identity authentication information of the authentication server with respect to information including the result for verifying the first authenticator together with the second time-varying parameter and further together with a sixth optional field;

where the fourth identity authentication message may further be a message, which includes the result for verifying the secure domain where the second authenticator resides by the authentication server, includes the result for verifying the first authenticator by the authentication server, and includes identity authentication information of the authentication server with respect to information including the result for verifying the secure domain where the second authenticator resides by the authentication server, the third time-varying parameter, the result for verifying the first authenticator, the second time-varying parameter and a seventh optional field.

Step 6: after the first authenticator receives the fourth identity authentication information, verifying identity legality of the second authenticator, which includes:

6.1) verifying, by the first authenticator, whether the identity authentication information of the authentication server with respect to information including the result for verifying the secure domain where the second authenticator resides, the first time-varying parameter and the fourth optional field is valid or whether the identity authentication information of the authentication server with respect to information including the result for verifying the secure domain where the second authenticator resides, the first time-varying parameter, the result for verifying the first authenticator, the third time-varying parameter generated by the second authenticator and the sixth optional field is valid, according to the public authentication information of the authentication server, and checking whether the first time-varying parameter which is generated by the first authenticator and is included in the first identity authentication message is consistent with the first time-varying parameter included in the identity authentication information of the authentication server with respect to information including the result for verifying the secure domain where the second authenticator resides, the first time-varying parameter and the fourth optional field or is consistent with the first time-varying parameter included in the identity authentication information of the authentication server with respect to information including the result for verifying the secure domain where the second authenticator resides, the first time-varying parameter, the result for verifying the first authenticator, the third time-varying parameter generated by the second authenticator and the sixth optional field; if the identity authentication information of the authentication server with respect to information including the result for verifying the secure domain where the second authenticator resides, the first time-varying parameter and the fourth optional field is valid, and if the first time-varying parameter which is generated by the first authenticator and is included in the first identity authentication message is consistent with the first time-varying parameter included in the identity authentication information of the authentication server with respect to information including the result for verifying the secure domain where the second authenticator resides by the authentication server, the first time-varying parameter and the fourth optional field or is consistent with the first time-varying parameter included in the identity authentication information of the authentication server with respect to information including the result for verifying the secure domain where the second authenticator resides, the first time-varying parameter, the result for verifying the first authenticator, the third time-varying parameter generated by the second authenticator and the sixth optional field, executing 6.2); or else, determining that the second authenticator is illegal, ending authentication process or executing step 7;

6.2) obtaining, by the first authenticator, the result for the authentication server to verify the secure domain where the second authenticator resides, executing 6.3) if the secure domain where the second authenticator resides is determined to be legal and valid according to the result; otherwise, determining that the second authenticator is illegal, ending the authentication process or executing step 7;

6.3) acquiring, by the first authenticator, the public authentication information of the identification of the secure domain where the second authenticator resides, verifying, according to the public authentication information, whether the identity authentication information of the second authenticator with respect to information including the identifier of the secure domain where the second authenticator resides, the first time-varying parameter, the second time-varying parameter generated by the second authenticator, the identifier of the first authenticator and the third optional field is valid, checking whether the identifier of the secure domain where the second authenticator resides is consistent with the identifier of the secure domain where the second authenticator resides included in the identity authentication information of the second authenticator with respect to information including the identifier of the secure domain where the second authenticator resides, the first time-varying parameter, the second time-varying parameter generated by the second authenticator, the identifier of the first authenticator and the third optional field, verifying whether the first time-varying parameter which is generated by the first authenticator and is included in the first identity authentication message is consistent with the first time-varying parameter included in the identity information of the second authenticator with respect to information including the identifier of the secure domain where the second authenticator resides, the first time-varying parameter, the second time-varying parameter generated by the second authenticator, the identifier of the first authenticator and the third optional field; if the identity authentication information of the second authenticator with respect to information including the identifier of the secure domain where the second authenticator resides, the first time-varying parameter, the second time-varying parameter generated by the second authenticator, the identifier of the first authenticator and the third optional field is valid, the identifier of the secure domain where the second authenticator resides is consistent with the identifier of the secure domain where the second authenticator resides included in the identity authentication information of the second authenticator with respect to information including the identifier of the secure domain where the second authenticator resides, the first time-varying parameter, the second time-varying parameter generated by the second authenticator, the identifier of the first authenticator and the third optional field, and the first time-varying parameter which is generated by the first authenticator and is included in the first identity authentication message is consistent with the first time-varying parameter included in the identity information of the second authenticator with respect to information including the identifier of the secure domain where the second authenticator resides, the first time-varying parameter and the second time-varying parameter generated by the second authenticator, the identifier of the first authenticator and the third optional field, determining that the second authenticator is legal; or else, determining that the second authenticator is illegal. The first authenticator completes the authentication to the second authenticator.

Step 7: transmitting, by the first authenticator, a fifth identity authentication message to the second authenticator, where the fifth identity authentication message may be a message which includes the result for verifying the first authenticator by the authentication server, includes a eighth optional field, includes identity authentication information of the authentication server with respect to information including the result for verifying the first authenticator together with the second time-varying parameter and further together with the sixth optional field, and includes identity authentication information of the first authenticator with respect to information including the identifier of the secure domain where the second authenticator resides, the first time-varying parameter, the second time-varying parameter generated by the second authenticator, the identifier of the first authenticator and a ninth optional field;

or the fifth identity authentication message may be a message which includes the first time-varying parameter, includes a tenth optional field, includes the result for verifying the secure domain where the second authenticator resides, includes the result for verifying the first authenticator by the authentication server, includes identity authentication information of the authentication server with respect to information including the result for verifying the secure domain where the second authenticator resides together with the third time-varying parameter and further together with the fifth optional field, includes identity authentication information of the authentication server with respect to information including the result for verifying the first authenticator, the second time-varying parameter and the sixth optional field, and includes identity authentication information of the first authenticator with respect to information including the identifier of the secure domain where the second authenticator resides, the identifier of the first authenticator and the ninth optional field.

Step8: after the second authenticator receives the fifth identity authentication message, verifying the fifth identity authentication message, which may include:

8.1) verifying whether the identity authentication information of the authentication server with respect to information including the result for verifying the first authenticator is valid by using the public authentication information of the authentication server, and checking whether the second time-varying parameter which is generated by the second authenticator and is included in the second identity authentication message confirms to the second time-varying parameter included in the identity authentication information of the authentication server with respect to information including the result for verifying the first authenticator; if the identity authentication information of the authentication server with respect to information including the result for verifying the first authenticator is valid and the second time-varying parameter which is generated by the second authenticator and included in the second identity authentication message confirms to the second time-varying parameter included in the identity authentication information of the authentication server with respect to information including the result for verifying the first authenticator, executing 8.2); or else, determining that the first authenticator is illegal;

8.2) acquiring, by the second authenticator, the result for verifying the first authenticator by the authentication server; if the first authenticator is determined to be valid according to the verification result, executing 8.3), or else, determining that the first authenticator is illegal and completing, by the second authenticator, authentication of the first authenticator;

8.3) acquiring, by the second authenticator, public authentication information of the first authenticator, verifying, according to the public authentication information, whether the identity authentication information of the first authenticator with respect to information including the identifier of the secure domain where the second authenticator resides, the first time-varying parameter, the second time-varying parameter generated by the second authenticator, the identifier of the first authenticator and the ninth optional field is valid, checking whether the identifier of the secure domain where the second authenticator resides is consistent with the identifier of the secure domain where the second authenticator resides included in the identity authentication information of the first authenticator with respect to information including the identifier of the secure domain where the second authenticator resides, the first time-varying parameter, the second time-varying parameter generated by the second authenticator, the identifier of the first authenticator and the ninth optional field, and verifying whether the second time-varying parameter which is generated by the second authenticator and is included in the second identity authentication message is consistent with the second time-varying parameter included in the identity authentication information of the first authenticator with respect to information including the identifier of the secure domain where the second authenticator resides, the first time-varying parameter, the second time-varying parameter generated by the second authenticator, the identifier of the first authenticator and the ninth optional field; if identity authentication information of the first authenticator with respect to information including the identifier of the secure domain where the second authenticator resides, the identifier of the first authenticator and the ninth optional field is valid, the identifier of the secure domain where the second authenticator resides is consistent with the identifier of the secure domain where the second authenticator resides included in the identity authentication information of the first authenticator with respect to information including the identifier of the secure domain where the second authenticator resides, the first time-varying parameter, the second time-varying parameter generated by the second authenticator, the identifier of the first authenticator and the ninth optional field, and the second time-varying parameter which is generated by the second authenticator included in the second identity authentication message is consistent with the second time-varying parameter included in the identity authentication information of the first authenticator with respect to information including the identifier of the secure domain where the second authenticator resides, the first time-varying parameter, the second time-varying parameter generated by the second authenticator, the identifier of the first authenticator and the ninth optional field, determining that the first authenticator is legal, or else determining that the first authenticator is illegal and completing, by the second authenticator, authentication of the first authenticator.

Through above process of mutual authentication between the first authenticator and the second authenticator, mutual authentication of identity legality may be implemented between the two entities, and identity information of the second authenticator is protected from being exposed.

Through above process of mutual authentication between the first authenticator and the second authenticator, mutual authentication of identity legality may be implemented between the two entities, and identity information of the second authenticator is protected from being exposed.

The first optional field, the second optional field, the third optional field, etc., are optional with unlimited contents, which are for the purpose of extension with optional contents voluntarily defined by a person while practicing this disclosure. Therefore, in other embodiments, the optional contents may be omitted.

The private authentication information of the first authenticator may be embodied as information such as private key in a public-key cryptosystem of information security field.

The private authentication information of the second authenticator may be embodied as information such as encryption key with an anonymous signature in the public-key cryptosystem of information security field.

The identity authentication information of the first authenticator or the authentication server may be information calculated from the private authentication information by using information security technology such as digital signature.

The identity authentication information of the second authenticator may be information calculated from the private authentication information by using information security technology such as anonymous digital signature.

The first time-varying parameter and the third time-varying parameter are both time-varying parameters generated by the first authenticator, which may be the same or different.

The purpose, technical solution and beneficial effects of the disclosure are described in detail in conjunction with the foregoing embodiments. It should be understood that the foregoing embodiments are only preferred embodiments of the disclosure and not meant to limit the disclosure; modifications, equivalent replacements and improvements within the spirit and the principle of the disclosure fall in the scope of the disclosure.

## Claims

1. A method for identity authentication, comprising:
1) transmitting, by a first authenticator, a first identity authentication message to a second authenticator, to launch the authentication;
2) transmitting, by the second authenticator, a second identity authentication message to the first authenticator, wherein the second identity authentication message comprises an identification of a secure domain where the second authenticator resides and identity authentication information of the second authenticator;
3) transmitting, by the first authenticator, a third identity authentication message to an authentication server, wherein the third identity authentication message comprises the identification of the secure domain where the second authenticator resides;
4) after the authentication server receives the third identity authentication message, verifying, by the authentication server, legality of the secure domain where the second authenticator resides according to the third identity authentication message;
5) transmitting, by the authentication server, a fourth identity authentication message to the first authenticator, wherein the fourth identity authentication message comprises a result for verifying the secure domain where the second authenticator resides by the authentication server and identity authentication information of the authentication server with respect to information comprising the result for verifying the secure domain where the second authenticator resides; and
6) after the first authenticator receives the fourth identity authentication message, verifying, by the first authenticator, identity legality of the second authenticator.

2. The method for identity authentication according to claim 1, wherein in step 4), the process of verifying, by the authentication server, legality of the secure domain where the second authenticator resides according to the third identity authentication message further comprises:
in the case that the identification of the secure domain where the second authenticator resides comprised in the third identity authentication message is an identifier of the secure domain where the second authenticator resides, searching, by the authentication server, public authentication information of the secure domain where the second authenticator resides, determining that the secure domain where the second authenticator resides is legal if the public authentication information is found, or determining that the secure domain where the second authenticator resides is illegal if the public authentication information is not found;
in the case that the identification of the secure domain where the second authenticator resides comprised in the third identity authentication message is identity proof information of the secure domain where the second authenticator resides, checking, by the identification server, validity of the identity proof information of the secure domain where the second authenticator resides, determining that the secure domain where the second authenticator resides is legal if the identity proof information is valid, or determining that the secure domain where the second authenticator resides is illegal if the identity proof information is not valid.

3. The method for identity authentication according to claim 1, wherein in step 6), the process of after the first authenticator receives the fourth identity authentication message, verifying identity legality of the second authenticator further comprises:
6.1) verifying, by the first authenticator, whether the identity authentication information of the authentication server comprised in the fourth identity authentication message is valid, executing step 6.2) if the identity authentication information of the authentication server comprised in the fourth identity authentication message is valid, or determining that the second authenticator is illegal and completing identity authentication for the second authenticator by the first authenticator if the identity authentication information of the authentication server comprised in the fourth identity authentication message is not valid;
6.2) executing step 6.3) if the first authenticator determines, according to the result for verifying the secure domain where the second authenticator resides by the authentication server, that the secure domain where the second authenticator resides is legal and valid, or determining that the second authenticator is illegal and completing the identity authentication for the second authenticator by the first authenticator if the secure domain is not valid; and 6.3) acquiring, by the first authenticator, public authentication information of the secure domain where the second authenticator resides from the fourth identity authentication message, and verifying, according to the public authentication information, whether the identity authentication information of the second authenticator is valid, determining that the second authenticator is legal if the identity authentication information of the second authenticator is valid, or determining that the second authenticator is illegal if the identity authentication information of the second authenticator is not valid.

4. The method for identity authentication according to claim 1, wherein:
the first identity authentication message further comprises a first time-varying parameter generated by the first authenticator;
the identity authentication information of the second authenticator comprised in the second identity authentication message further comprises the first time-varying parameter and an identifier of the first authenticator;
the identity authentication information of the authentication server comprised in the fourth identity authentication message further comprises a third time-varying parameter;
in step 6), the process of after the first authenticator receives the fourth identity authentication message, verifying identity legality of the second authenticator further comprises:
6.1)verifying, by the first authenticator, whether the identity authentication information of the authentication server comprised in the fourth identity authentication message is valid, and verifying whether the third time-varying parameter which is generated by the first authenticator and is comprised in the third identity authentication message conforms to the third time-varying parameter comprised in the identity authentication information of the authentication server, executing step 6.2) if the identity authentication information of the authentication server comprised in the fourth identity authentication message is valid and the third time-varying parameter which is generated by the first authenticator and is comprised in the third identity authentication message conforms to the third time-varying parameter comprised in the identity authentication information of the authentication server, or else determining that the second authenticator is illegal and completing the identity authentication for the second authenticator by the first authenticator;
6.2) executing step 6.3) if the first authenticator determines, according to the result for verifying the secure domain where the second authenticator resides by the authentication server, that the secure domain where the second authenticator resides is valid, or determining that the second authenticator is illegal and completing the identity authentication for the second authenticator by the first authenticator if the first authenticator determines that the secure domain is not valid; and
6.3) acquiring, by the first authenticator, public authentication information of the secure domain where the second authenticator resides from the fourth identity authentication message, verifying, according to the public authentication information, whether the identity authentication information of the second authenticator is valid, and checking whether the first-varying parameter which is generated by the authenticator and is comprised in the first authentication message is consistent with the first time-varying parameter comprised in the identity authentication information of the second authenticator, determining that the second authenticator is legal if the identity authentication information of the second authenticator is valid and the first-varying parameter which is generated by the authenticator and is comprised in the first authentication message is consistent with the first time-varying parameter comprised in the identity authentication information of the second authenticator, or else determining that the second authenticator is illegal.

5. The method for identity authentication according to claim 1 or claim 2 or claim 3 or claim 4, wherein:
in step 1), the first identity authentication message further comprises an identification of the first authenticator;
in step 3), the third identity authentication message further comprises the identification of the first authenticator;
in step 4), the authentication server further verifies legality of the secure domain where the second authenticator resides according to the third identity authentication message;
in step 5), the result for verifying the first authenticator by the authentication server and identity authentication information of the authentication server with respect to information comprising the result for verifying the first authenticator are added into the fourth identity authentication message; or, the result for verifying the first authenticator by the authentication server is added into the fourth identity authentication message and the identify authentication information of the authentication server comprised in the fourth identity authentication message further comprises the result for verifying the first authenticator by the authentication server;
the method for identity authentication further comprises following steps:
7) transmitting, by the first authenticator, the fifth identity authentication message to the second authenticator, wherein the fifth identity authentication message comprises identity authentication information of the first authenticator;
8) after the second authenticator receives the fifth identity authentication message, verifying, by the second authenticator, the fifth identity authentication message, and determining identity legality of the first authenticator according to the verification result.

6. The method for identity authentication according to claim 5, wherein in step 4) the authentication server further verifies the legality of the first authenticator according to the third identity authentication message, comprising:
in a case that the identification of the first authenticator comprised in the third identity authentication message is an identifier of the first authenticator, searching, by the authentication server, public authentication information of the first authenticator, determining that the first authenticator is legal if the public authentication information is found, or determining that the first authenticator is illegal if the public authentication information is not found; or
in a case that the identification of the first authenticator comprised in the third identity authentication message is the identity proof information of the first authenticator, checking, by the authentication server, validity of the identity proof information of the first authenticator, determining that the first authenticator is legal if the identity proof information of the first authenticator is valid, or determining that the first authenticator is illegal if the identity proof information of the first authenticator is not valid.

7. The method for identity authentication according to claim 5, wherein, in step 8), the process of verifying, by the second authenticator, the fifth identity authentication message, and determining identity legality of the first authenticator according to the verification result further comprise:
8.1) verifying, by the second authenticator, whether the identity authentication information of the authentication server with respect to the information comprising the result for verifying the first authenticator is valid, executing 8.2) if the identity authentication information of the authentication server with respect to the information comprising the result for verifying the first authenticator is valid, or determining that the first authenticator is illegal if the identity authentication information of the authentication server with respect to the information comprising the result for verifying the first authenticator is not valid;
8.2) executing 8.3) if the second authenticator determines, according to the result for verifying the first authenticator by the authentication server, that the first authenticator is legal and valid, or else determining that the first authenticator is illegal;
8.3) acquiring, by the second authenticator, the public authentication information of the first authenticator, verifying whether the first authenticator is valid according to the public authentication information, and checking whether the identifier of the secure domain where the second authenticator resides is consistent with the identifier of the secure domain where the second authenticator resides which is comprised in the identity authentication information of the first authenticator, determining that the first authenticator is legal if the first authenticator is valid and the identifier of the secure domain where the second authenticator resides is consistent with the identifier of the secure domain where the second authenticator resides comprised in the identity authentication information of the first authenticator, or else determining that the first authenticator is illegal.

8. The method for identity authentication according to claim 5, wherein
in step 2), the second identity authentication message further comprises a second time-varying parameter generated by the second authenticator, and the identity authentication information of the second authenticator comprised in the second identity authentication message further comprises the second time-varying parameter;
in step 3), the third identity authentication message further comprises the second time-varying parameter;
in step 5), the identity authentication information of the authentication server with respect to the information comprising the result for verifying the first authenticator further comprises the second time-varying parameter;
in step 8), the process of verifying, by the second authenticator, the fifth identity authentication message, and determining identity legality of the first authenticator according to the verification result further comprises:
8.1) verifying, by the second authenticator, whether the identity authentication information of the authentication server with respect to the information comprising the result for verifying the first authenticator is valid, and checking whether the second time-varying parameter which is generated by the second authenticator and is comprised in the second identity authentication message confirms to the second time-varying parameter comprised in the identity authentication information of the authentication server with respect to the information comprising the result for verifying the first authenticator, executing 8.2) if the identity authentication information of the authentication server with respect to the information comprising the result for verifying the first authenticator is valid and the second time-varying parameter which is generated by the second authenticator and is comprised in the second identity authentication message confirms to the second time-varying parameter comprised in the identity authentication information of the authentication server with respect to the information comprising the result for verifying the first authenticator; or else determining that the first authenticator is illegal;
8.2) executing 8.3) if the second authenticator determines that the first authenticator is legal and valid according to the result for verifying the first authenticator by the authentication server, or else determining that the first authenticator is illegal;
8.3) acquiring, by the second authenticator, the public authentication information of the first authenticator; verifying, according to the public authentication information, whether the first authenticator is valid, checking whether the identifier of the secure domain where the second authenticator resides is consistent with the identifier of the secure domain where the second authenticator resides comprised in the identity authentication information of the first authenticator, and checking whether the second time-varying parameter which is generated by the second authenticator and is comprised in the second identity authentication message is consistent with the second time-varying parameter comprised in the identity authentication information of the second authenticator, determining that the first authenticator is legal if the first authenticator is valid, the identifier of the secure domain where the second authenticator resides is consistent with the identifier of the secure domain where the second authenticator resides comprised in the identity authentication information of the first authenticator, and the second time-varying parameter which is generated by the second authenticator and is comprised in the second identity authentication message is consistent with the second time-varying parameter comprised in the identity authentication information of the second authenticator, or else determining that the first authenticator is illegal.

9. A first authentication device comprising:
a transmitting unit, a receiving unit and a verifying unit, wherein:
the transmitting unit is configured to transmit a first identity authentication message to a second authentication device, to launch an authentication;
the receiving unit is configured to receive a second identity authentication message transmitted by the second authentication device, wherein the second identity authentication message comprises an identification of a secure domain where the second authentication device resides and identity authentication information of the second authentication device;
the transmitting unit is further configured to transmit a third identity authentication message to an authentication server, wherein the third identity authentication message comprises the identification of the secure domain where the second authentication device resides;
the receiving unit is further configured to receive a fourth identity authentication message transmitted by the authentication server, wherein the fourth identity authentication message comprises a result for verifying the secure domain where the second authentication device resides by the authentication server and identity authentication information of the authentication server with respect to information comprising the result for verifying the secure domain where the second authentication device resides; and
the verifying unit is configured to verify identity legality of the second authentication device.

10. The first authentication device according to the claim 9, wherein:
the transmitting unit is further configured to transmit a fifth identity authentication message to the second authentication device, wherein the fifth identity authentication message comprises the identity authentication information of the first authentication device.

11. A second authentication device comprising:
a receiving unit and a transmitting unit; wherein:
the receiving unit is configured to receive a first identity authentication message transmitted by a first authentication device; and
the transmitting unit is configured to transmit a second identity authentication message to the first authentication device, wherein the second identity authentication message includes an identification of a secure domain where the second authentication device resides and identity authentication information of the second authentication device.

12. The second authentication device according to claim 11, wherein
the receiving unit is further configured to receive a fifth identity authentication message transmitted by the first authentication device; and
the second authentication device further comprises a verifying unit, wherein the verifying unit is configured to verify according to the fifth identity authentication message received by the receiving unit and determine identity legality of the first authentication device according to a verification result.

13. An authentication server comprising:
a receiving unit, a verifying unit and a transmitting unit; wherein:
the receiving unit is configured to receive a third identity authentication message transmitted by a first authentication device, the third identity authentication message comprises an identification of a secure domain where the second authentication device resides;
the verifying unit is configured to verify, according to the third identity authentication message, legality of the secure domain where the second authentication device resides; and
the transmitting unit is configured to transmit a fourth identity authentication message to the first authentication device, the fourth identity authentication message comprises a result for verifying the secure domain where the second authentication device resides by the authentication server and identity authentication information of the authentication server with respect to information comprising the result for verifying the secure domain where the second authentication device resides.

14. An identity authentication system configured to execute the method for identity authentication according to claim 1, wherein the system comprises a first authentication device, a second authentication device, a secure domain where the second authentication device resides, and an authentication server, during a process of identity authentication between the first authentication device and the second authentication device, the second authentication device only interacts with the first authentication device, the authentication server only interacts with the first authentication device; wherein
the interaction performed between the first authentication device and the second authentication device comprises: transmitting, by the first authentication device, a first identity authentication message to the second authentication device; transmitting, by the second authentication device, a second identity authentication message, which comprises an identification of a secure domain where the second authentication device resides and identity authentication information of the second authentication device, to the first authentication device; and
the interaction performed between the authentication server and the first authentication device comprises: transmitting, by the first authentication device, a third identity authentication message to the authentication server, wherein the third identity authentication message comprises the identification of the secure domain where the second authentication device resides; transmitting, by the authentication server, a fourth identity authentication message to the first authentication device, wherein the fourth identity authentication message comprises a result for verifying the secure domain where the second authentication device resides by the authentication server and identity authentication information of the authentication server with respect to information comprising the result for verifying the secure domain where the second authentication device resides.

15. The authentication system according to claim 14, wherein the authentication server is further configured to, after receiving the third identity authentication message, verify, according to the third identity authentication message, legality of the secure domain where the second authentication device resides; and the first authentication device is configured to, after receive the fourth identity authentication message, verify identity legality of the second authentication device.
